# FASCICULE DE BREVET EUROPEEN

(11) **EP 0 604 289 B1**
(45) Date de publication et mention de la délivrance du brevet: **24.09.1997**
(21) Numéro de dépôt: 93403089.1
(22) Date de dépôt: 17.12.1993
(51) Int. Cl.: B60S 1/08, H02H 7/085, H02H 3/07

(54) **Procédé et dispositif d'alimentation d'un moteur électrique d'entrainement d'un bras d'essuie-glace de véhicule automobile**
Stromversorgungsverfahren und -vorrichtung für einen elektrischen Motor zum Antrieb eines Scheibenwischers eines Kraftfahrzeugs
Method and device for supplying power to an electric motor for driving a windscreen wiper of a automotive vehicle

(30) Priorité: 17.12.1992 FR 9215237; 17.12.1992 FR 9215238
(43) Date de publication de la demande: 29.06.1994
(73) Titulaire: VALEO SYSTEMES D'ESSUYAGE, 78321 La Verrière (FR)
(72) Inventeur: Papazian, Samuel, F-86100 Chatellerault (FR); Douville, Eric, F-92700 Colombes (FR)
(74) Mandataire: Gamonal, Didier

(56) Documents cités:
- EP-A- 0 511 495
- FR-A- 2 415 562
- FR-A- 2 443 161
- GB-A- 2 152 243
- GB-A- 2 180 078
- US-A- 3 028 533
- US-A- 3 583 021

## Description

La présente invention est relative à un procédé et à un dispositif d'alimentation d'un moteur électrique d'entraînement d'un bras d'essuie-glace de véhicule automobile.

On connait déjà dans l'état de la technique notamment dans les documents FR-A-2 443 161 et FR-A-2 415 562, un certain nombre de dispositifs d'alimentation de ce type qui comportent une unité de commande de l'alimentation du moteur raccordée à un organe de commande actionnable par un utilisateur, comportant des capteurs de position du bras d'essuie-glace et comportant en outre des moyens de commande de l'alimentation du moteur, par exemple dans un sens ou dans l'autre en fonction de la position du bras, pour assurer un balayage d'une surface vitrée, par exemple du pare-brise ou de la lunette arrière du véhicule.

Ces moyens de commande de l'alimentation du moteur comprennent par exemple des relais pilotés par l'unité de commande.

Certains dispositifs comportent également des moyens de protection du moteur électrique d'entraînement en cas de blocage de son arbre de sortie, afin d'éviter une surchauffe pouvant conduire à la destruction du moteur.

Ces moyens de protection sont généralement constitués par un système à bilame qui est disposé à l'intérieur ou à l'extérieur du carter du moteur et qui est sensible à la température du moteur, pour provoquer une coupure de l'alimentation du moteur lors de détection d'un accroissement de température du moteur, par exemple en cas de blocage de son arbre de sortie.

Cependant, cette structure présente un certain nombre d'inconvénients, notamment celui de nécessiter l'adjonction d'un composant supplémentaire et son raccordement avec l'unité de commande.

On connaît par ailleurs un procédé de contrôle de l'alimentation d'un moteur d'essuyage décrit dans le document EP-A-0 511 495 (dont les caractéristiques correspondent aux préambules des revendications 1 et 6) selon lequel, lors du démarrage du moteur, on teste pendant une phase d'examen si le moteur fonctionne et si, à l'issue de catte phase d'examen, le moteur n'a pas démarré, on coupe l'alimentation pendant une durée beaucoup plus longue que celle de la phase d'examen, avant d'alimenter à nouveau le moteur.

De plus, dans un certain nombre de dispositifs de l'état de la technique, le fonctionnement de l'unité de commande de l'alimentation du moteur est en outre contrôlé par un contact de clé du véhicule qui, de même que l'organe de commande, est actionnable par un utilisateur et est de plus connecté en série entre une source d'alimentation en énergie et l'unité de commande de l'alimentation du moteur.

L'organe de commande peut être un organe à commandes multiples, telles que par exemple pour la commande d'un balayage intermittent ou continu du bras d'essuie-glace.

Dans certains dispositifs de l'état de la technique, une borne d'entrée pour l'alimentation de l'unité de commande est raccordée au point milieu entre le contact de clé du véhicule et l'organe de commande.

Lorsque l'utilisateur provoque un arrêt de l'essuie-glace par coupure de l'organe de commande, l'unité de commande pilote l'alimentation du moteur pour que celui-ci ramène le bras d'essuie-glace dans une position de parquage déterminée.

Par contre, si l'utilisateur manoeuvre le contact de clé du véhicule, et ouvre celui-ci alors que l'essuie-glace est en fonctionnement, l'alimentation de l'unité de commande du moteur est coupée de sorte que le bras d'essuie-glace s'arrête en position intermédiaire.

C'est pourquoi, le dispositif de la présente invention comporte des moyens pour permettre à l'unité de commande du moteur d'entraînement du bras d'essuie-glace de ramener celui-ci dans une position de parquage après coupure du contact de clé ou de l'organe de commande.

Dans ce qui va suivre, le fonctionnement du dispositif d'alimentation lorsque le contact du véhicule est assuré, est dénommé mode de fonctionnement sous contact. De plus, le fonctionnement du dispositif d'alimentation après que l'utilisateur ait coupé le contact, par exemple en retirant sa clé, est dénommé mode de fonctionnement hors contact. Ce dernier mode de fonctionnement a pour but de ramener le bras d'essuie-glace dans sa position de parquage.

Les dispositifs de l'état de la technique, même lorsqu'ils comportent un mode de fonctionnement hors contact, ne disposent pas d'un traitement adapté au cas de non fonctionnement du moteur d'entraînement.

L'invention a pour but de résoudre ces problèmes en proposant un procédé et un dispositif d'alimentation qui soit simple et fiable.

En effet l'invention propose un procédé pour l'alimentation d'un moteur électrique d'entraînement d'un bras d'essuie-glace de véhicule automobile, du type consistant à couper au moins provisoirement l'alimentation du moteur en cas de mauvais fonctionnement, voire de non-fonctionnement, l'alimentation étant coupée au bout d'un premier temps déterminé défini comme étant suffisant pour obtenir un comportement déterminé du bras d'essuie-glace en conditions de fonctionnement normales.

Selon l'invention, ledit premier temps déterminé est au moins supérieur au plus grand des temps aller et retour que met le bras d'essuie-glace en conditions de fonctionnement normales pour aller d'une première position extrême de balayage à une deuxième position extrême de balayage.

Selon une autre caractéristique de l'invention, la coupure de l'alimentation du moteur est inhibée au bout d'un second temps déterminé afin de permettre un nouvel essai d'alimentation du moteur.

Selon une autre caractéristique de l'invention, des phases d'alimentation et de coupure sont alternativement répétées jusqu'à obtention dudit comportement déterminé du bras d'essuie-glace.

Selon une autre caractéristique de l'invention, des phases d'alimentation et de coupure sont alternativement répétées jusqu'à la totalisation d'un nombre d'essais infructueux déterminé.

Selon une autre caractéristique de l'invention, en cas de totalisation du nombre d'essais infructueux déterminé l'alimentation du moteur est coupée définitivement.

L'invention concerne aussi un dispositif d'alimentation d'un moteur électrique notamment d'entraînement d'un bras d'essuie-glace de véhicule automobile, du type comportant une unité de commande raccordée à des organes de commande actionnables par un utilisateur et à un moyen de détection doté de capteurs de position du bras d'essuie-glace, et comportant un circuit de commande de l'alimentation du moteur, pilotés par l'unité de commande ladite unité de commande comportant des moyens de coupure, au moins provisoire, de l'alimentation du moteur au bout d'un premier temps déterminé, caractérisé en ce que ledit premier temps déterminé est au moins supérieur au plus grand des temps aller et retour que met le bras d'essuie-glace en conditions de fonctionnement normales pour aller d'une première position extrême de balayage à une deuxième position extrême de balayage.

Selon une autre caractéristique de l'invention, lesdits moyens de coupure sont connectés à un moyen de manière à couper l'alimentation du moteur pendant un second temps déterminé si ces moyens de coupure n'ont pas été désactivés par activation d'un capteur de position par le bras.

Selon une autre caractéristique de l'invention, l'unité de commande est adaptée pour déclencher au moins une nouvelle tentative d'alimentation du moteur, après détection d'un défaut de fonctionnement lors d'une première tentative d'alimentation.

Selon une autre caractéristique de l'invention, lesdits moyens de coupure sont reliés à des moyens de commande de l'alimentation du moteur.

L'invention porte également sur un dispositif dans lequel le fonctionnement de l'unité de commande de l'alimentation du moteur est contrôlé en outre par un contact de clé du véhicule et un organe de commande du fonctionnement du moteur, actionnables par un utilisateur et connectés en série entre une source d'alimentation en énergie et l'unité de commande, caractérisé en ce qu'une borne d'alimentation en énergie de l'unité de commande est raccordée à la source d'alimentation, en parallèle sur le contact de clé et l'organe de commande, pour permettre à l'unité de commander le moteur d'entraînement du bras d'essuie-glace afin qu'il ramène celui-ci dans une position de parquage après coupure du contact de clé ou de l'organe de commande.

D'autres caractéristiques et avantages de l'invention apparaîtront à la lecture de la description détaillée qui va suivre pour la compréhension de laquelle on se reportera aux dessins annexés dans lesquels :
- la figure 1 est un organigramme présentant les étapes du procédé d'alimentation de l'invention ;
- la figure 2 est une vue qui représente un schéma synoptique illustrant le fonctionnement d'un dispositif d'alimentation selon l'invention ;
- la figure 3 est un schéma illustrant la définition du premier temps déterminé selon le principe de l'invention;
- la figure 4 est un schéma d'un circuit d'alimentation du moteur selon l'invention ;
- la figure 5 est un chronogramme des signaux présents sur les capteurs au cours d'un phase normale du fonctionnement des balais d'essuie-glace ;
- la figure 6 est un chronogramme des signaux de l'unité de commande selon l'invention dans le cas d'une phase anormale de fonctionnement des balais d'essuie-glace.

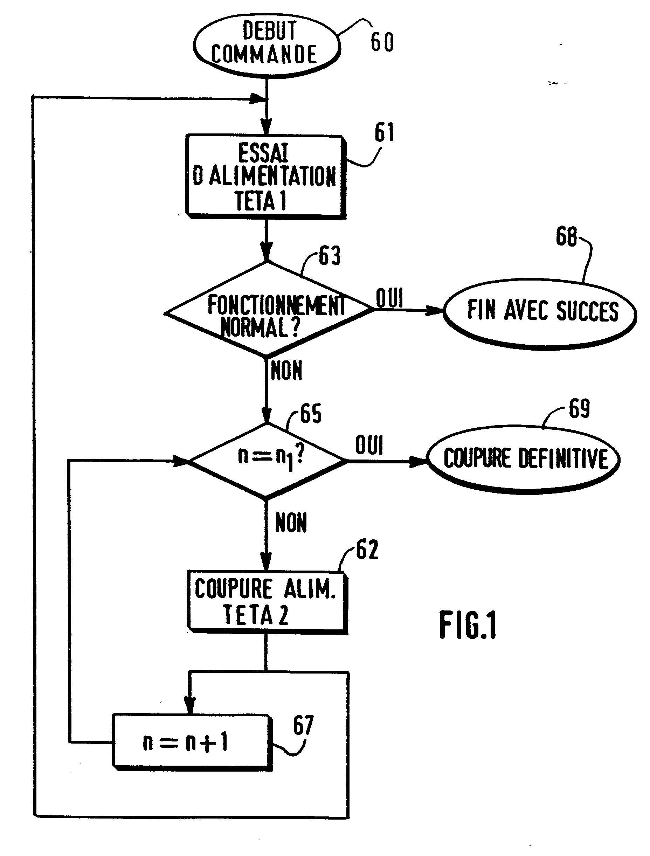

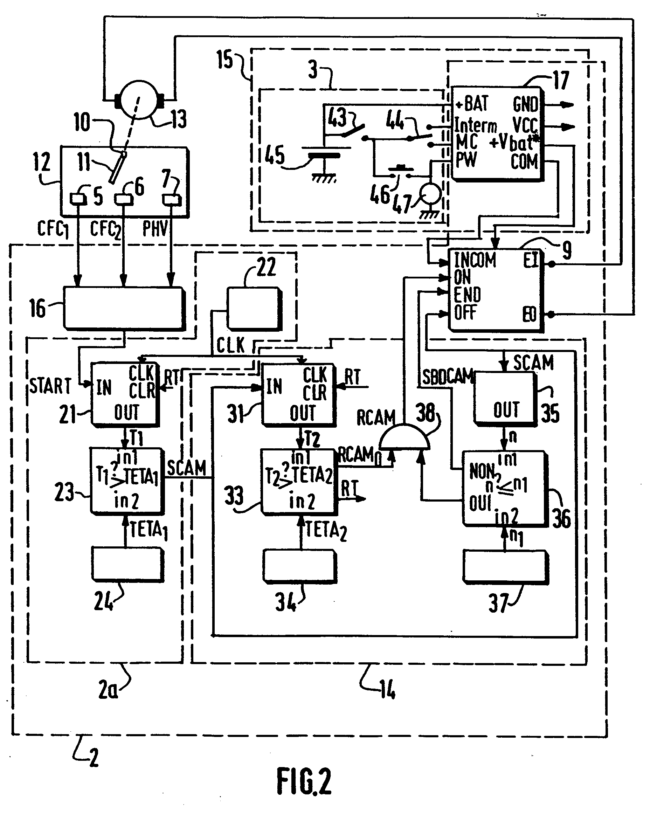

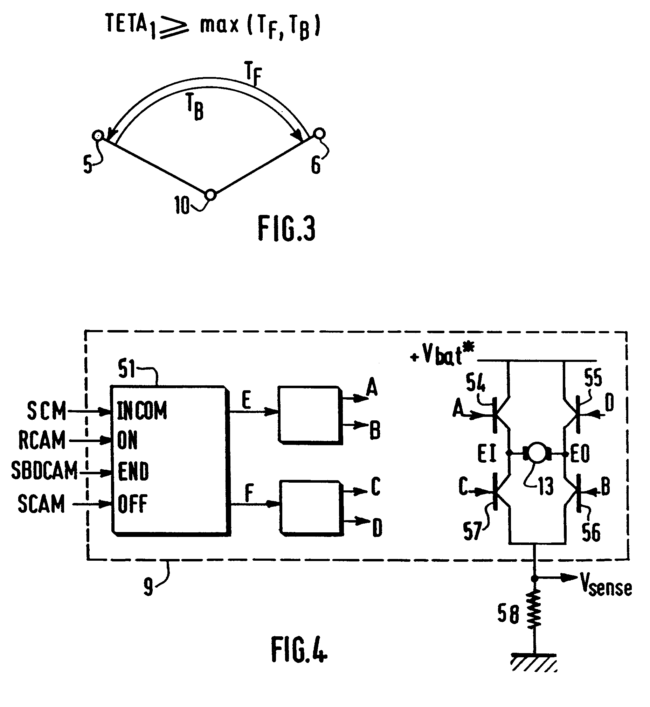

A la figure 1, les différentes étapes du procédé d'alimentation de l'invention sont présentées sous la forme d'un organigramme dans lequel le bloc 60 représente le début de l'opération de commande du moteur du bras d'essuie-glace.

La première étape proprement dite, référencée 61 sur la figure 1, consiste à faire un essai d'alimentation du moteur.

Si, dans l'intervalle d'un premier temps TETA₁ cet essai est positif, c'est-à-dire que le bras d'essuie-glace présente le comportement attendu, alors l'algorithme se termine avec succès par une étape référencée 68.

Dans le cas contraire, c'est que le moteur d'entraînement présente un disfonctionnement voire un non-fonctionnement. La seconde étape proprement dite consiste alors à couper l'alimentation du moteur pendant un second temps déterminé TETA₂. Cette seconde étape proprement dite est référencée 62 sur la figure 1, et est suivie par un nouvel essai d'alimentation. L'algorithme reboucle ainsi sur l'étape 61.

Mais, auparavant, un test 65 consiste à déterminer si l'essai d'alimentation qui vient d'être réalisé en 61 était le dernier essai admissible.

En effet, les essais d'alimentation sont réalisés par bouclage entre l'étape 61 d'alimentation, d'une part, et l'étape 62 de coupure et d'attente pendant un temps TETA₂ d'autre part, le nombre total d'essais d'alimentation successifs, c'est-à-dire aussi le nombre d'itérations de la boucle, étant limité à un nombre d'essais maximum n₁.

Aussi, l'étape 65 consiste-t-elle à comparer un nombre n d'essais d'alimentation réalisés audit nombre d'essais maximum n₁. Si la réponse au test 65 est non, c'est-à-dire si le nombre n d'essais d'alimentation réalisés est inférieur strictement au nombre maximum n₁ d'essais infructueux, alors un essai d'alimentation supplémentaire peut être tenté après un temps d'attente égal au second temps déterminé TETA₂.

Comme indiqué plus haut, l'organigramme boucle donc à partir de l'étape 62 de coupure pendant un temps déterminé TETA₂ sur l'étape 61 d'essai d'alimentation.

Parallèlement, le nombre n d'essais d'alimentation réalisés est incrémenté de un lors d'une étape référencée 67.

Si, par contre, la réponse au test 65 est "oui", c'est-à-dire si on a déjà opéré un nombre d'essais égal au nombre maximum n₁ d'essais infructueux, alors l'algorithme s'achève par une étape 69 de coupure définitive de l'alimentation du moteur. L'alimentation du moteur est alors coupée définitivement.

Le fonctionnement du dispositif d'alimentation selon l'invention est décrit ci-dessous dans un mode de réalisation en logique positive, c'est à dire qu'un niveau logique 1 est représenté par un signal à l'état haut ou une impulsion de tension positive. Ce mode de réalisation est un mode préféré et ne constitue nullement une limitation sur la façon dont le dispositif de l'invention peut être réalisé.

A la figure 2, le dispositif d'alimentation d'un moteur électrique 13 comporte selon l'invention une unité de commande 2 constituée de divers éléments dont le détail est donné ci-dessous. Des organes de commande 3 actionnables par un utilisateur sont raccordés à un circuit de commande 17 de l'unité de commande 2, lesdits oragnes de commande 3 et ledit circuit de commande 17 formant un circuit de commande d'essuyage et d'alimentation 15. En outre, le dispositif d'alimentation comporte aussi un moyen de détection 12 de position du bras d'essuie-glace doté notamment de capteurs 5, 6 et 7.

Un premier capteur 5 est implanté dans l'une des positions extrêmes de balayage, un second capteur 6 est implanté dans l'autre des positions extrêmes de balayage, et le troisième capteur 7 est implanté en position de parquage du bras d'essuie-glace.

De plus, le bras d'essuie-glace est constitué par un élément mobile 11, par exemple mobile en rotation autour d'un arbre 10.

A la figure 3, l'arbre 10 est représenté ainsi que les capteurs de positions extrêmes de balayages 5 et 6.

L'élément mobile 11 (non représenté) peut couvrir la totalité du secteur angulaire compris entre lesdites positions extrêmes. Lors du balayage, le sens de déplacement de l'élément mobile 11 est inversé lorsqu'une des positions extrêmes est atteinte.

Le moteur d'entraînement du bras d'essuie-glace tournant à une vitesse obéissant à une loi connue, par exemple définie dans le circuit de commande 17, le temps nécessaire au bras d'essuie-glace pour atteindre l'une des positions extrêmes indiquées précédemment après être passé par l'autre de ces positions extrêmes, est connu avec certitude.

Puisque le bras d'essuie-glace comporte deux sens opposés de déplacement, on définit ainsi un premier temps T_{F} et un second temps T_{B}. Dans un mode de réalisation préféré de l'invention, ces deux temps sont égaux, bien que cela ne limite pas la généralité du principe de l'invention. Dans le cas général, on note TETA₁ au moins le plus grand des temps T_{F} et T_{B}.

A la figure 2, les capteurs de positions extrêmes 5 et 6 délivrent des signaux de fin de course, respectivement CFC1 et CFC2, sous la forme d'une impulsion de tension lorsqu'ils sont activés. De même, le capteur 7 de position de parquage délivre un signal de parquage, par exemple un signal de parquage hors vitre PHV, sous la forme d'une impulsion de tension lorsqu'il est activé.

Ces trois signaux CFC1, CFC2, et PHV sont transmis à un module de détection 16 auquel sont directement reliés les trois capteurs 5, 6, et 7.

Ce module de détection 16 est adapté à générer un signal START qui est transmis à des moyens 2a de coupure de l'alimentation du moteur au bout d'un premier temps déterminé.

Ces moyens 2a sont constitués par un premier compteur de temps 21, un générateur de signal d'horloge 22 tel qu'un oscillateur, un comparateur 23 et un registre 24 d'une mémoire.

Le compteur de temps 21 commence à compter les impulsions qui se présentent sur son entrée CLK dès que le signal START, qui est transmis par le module de détection 16 sur son entrée IN, présente une information de départ sous la forme d'une impulsion de tension.

A chaque instant, le compteur présente sur sa sortie OUT une information T1 sur le temps écoulé.

A chaque instant aussi, cette information T1 est transmise sur une première entrée in₁ du comparateur 23, et est comparée à la grandeur présente sur une seconde entrée in₂ dudit comparateur qui est reliée à la mémoire 24. La mémoire 24 contient la valeur du premier temps déterminé TETA₁ défini ci-dessus en considération de la figure 3.

Par ailleurs, le compteur de temps 21 comporte une entrée de remise à zéro CLR, adaptée à recevoir un signal de remise à zéro.

Ainsi, lorsque le temps écoulé depuis le dernier passage du bras d'essuie-glace par une position extrème devient supérieur au temps prédéfini TETA₁, le comparateur 23 génère un signal de coupure de l'alimentation du moteur SCAM qui est transmis à un moyen 14 d'inhibition du circuit 9 d'alimentation du moteur 13.

Ce signal SCAM a donc pour effet de couper l'alimentation du moteur 13, via un ordre d'inhibition fourni au circuit 9 d'alimentation du moteur. En effet, si au bout du temps déterminé TETA₁ cette position n'est pas atteinte, c'est à dire que le capteur de position 5 ou 6 selon le sens de déplacement du bras d'essuie-glace, n'est pas actionné, on peut conclure que le moteur présente un disfonctionnement, qui peut être par exemple un blocage mécanique de son arbre de sortie, et qu'il est donc nécessaire de couper son alimentation.

Par contre, il se peut que le disfonctionnement du moteur, où l'empêchement mécanique ayant conduit à son blocage, ne soient que passagers. Dans tous les cas, il est utile de refaire un essai de fonctionnement du moteur d'entraînement du bras d'essuie-glace.

Ce nouvel essai peut se faire après qu'un second temps TETA₂ se soit écoulé depuis l'inhibition du circuit d'alimentation du moteur, ceci afin de permettre aux circuits électriques du moteur de refroidir, évitant ainsi leur destruction.

Pour autant, les essais cycliques de mise en fonctionnement du moteur 13 ne doivent pas se répéter à l'infini, surtout si le dispositif d'alimentation est en mode de mise en position de parquage, alors que le conducteur a déjà retiré sa clé de contact et a quitté son véhicule. En effet, une telle situation conduirait rapidement à la décharge complète de la batterie du véhicule, avec tous les inconvénients que cela comporte pour le conducteur.

Le signal de coupure de l'alimentation du moteur SCAM, déclenche le fonctionnement d'un second compteur de temps 31, semblable au premier compteur de temps 21 des moyens 2a de coupure de l'alimentation du moteur préalablement décrits. Ce compteur de temps compte le temps T₂ écoulé depuis la dernière inhibition du circuit 9 d'alimentation du moteur. Sa sortie est de plus reliée à une première entrée d'un comparateur 33, semblable au comparateur 23 décrit précédemment.

Lorsque le temps T₂ dépasse une seconde valeur de temps déterminé TETA₂, qui est contenue dans un registre 34 d'une mémoire relié à la seconde entrée du comparateur 33, la sortie dudit comparateur 33 délivre un signal RCAM₀ de remise à zéro conditionnel du circuit 9 d'alimentation du moteur.

Parallèlement, le signal de coupure de l'alimentation du moteur SCAM déclenche l'incrémentation d'un compteur d'essai 35, qui compte le nombre d'essais infructueux qui ont été réalisés pour alimenter le moteur 13 afin que le bras d'essuie-glace atteigne la position extrème voulue.

Ce compteur d'essais 35 comporte une entrée d'incrémentation +1 et une sortie qui est reliée à une première entrée d'un comparateur 36 semblable au comparateur 23 décrit précédemment, sauf en ce qu'il comporte deux sortie OUI et NON au lieu d'une seule pour le comparateur 23. La seconde entrée de ce comparateur 36 est reliée à un registre 37 d'une mémoire contenant un nombre déterminé n₁ correspondant au nombre maximal d'essais infructueux admis par le dispositif d'alimentation selon l'invention.

Lorsque le nombre n d'essais réalisés infructueux, qui sont comptés par le compteur d'essais 35, est inférieur ou égal au nombre n₁ contenu dans le registre 37, le test réalisé par le comparateur 36 est positif et un niveau logique 1 est fourni par une première sortie OUI de ce comparateur à une première entrée d'une porte logique ET référencée 38, alors qu'un niveau logique 0 est fourni par une seconde sortie NON de ce même comparateur 36. Un signal de blocage définitif du circuit d'alimentation du moteur SBDCAM, fourni par cette seconde sortie NON, est ainsi maintenu à l'état logique 0.

Dans le cas contraire, c'est à dire lorsque le nombre n d'essais réalisés infructueux, qui sont comptés par le compteur d'essais 35, est supérieur strictement au nombre n₁ contenu dans le registre 37, le test réalisé par le comparateur 36 est négatif et un niveau logique 0 est fourni par la première sortie OUI du comparateur 36 à ladite première entrée de ladite porte logique ET référencée 38, alors qu'un niveau logique 1 est fourni par ladite seconde sortie NON du comparateur 36. Ledit signal de blocage définitif du circuit d'alimentation du moteur SBDCAM, fourni par cette seconde sortie NON, est alors basculé à l'état logique 1.

Lorsque le signal RCAM₀ et le signal présent sur la sortie OUI du comparateur 36 sont simultanément à l'état haut, c'est à dire lorsque le temps T₂ dépasse la seconde valeur de temps déterminé TETA₂, et que le nombre n d'essais réalisés infructueux est inférieur ou égal au nombre n₁, le signal de sortie de la porte logique ET référencée 38 passe à létat haut. Ce signal de sortie, ci-dessous appelé signal de remise à zéro de la commande du circuit 9 d'alimentation du moteur RCAM, transmet alors un niveau logique 1 sur l'entrée correspondante du circuit 9 d'alimentation du moteur, ce qui a pour conséquence d'annuler l'effet d'inhibition induit par le signal de coupure de l'alimentation du moteur SCAM et de remettre le moteur 13 en marche.

Par ailleurs, lorsque le temps T₂ dépasse ladite seconde valeur de temps déterminé TETA₂ la sortie du comparateur 33 délivre en plus du signal RCAM₀ décrit précédemment, un signal RT de remise à zéro du premier compteur de temps référencé 21. Ce signal permet en effet de réinitialiser le compteur 21 afin de permettre le bon déroulement du second essai.

Le circuit 9 d'alimentation du moteur est maintenant décrit afin de préciser l'action des divers signaux qui régissent son fonctionnement, et dont certains ont déjà été présentés ci-dessus.

Le circuit 9 d'alimentation du moteur comporte plusieurs entrées qui sont :
- une entrée +V_{bat}* pour recevoir l'énergie issue de la batterie et fournie par le circuit de commande 17 ;
- au moins une entrée INCOM adaptée à recevoir au moins un signal SCM de commande du moteur qui est fourni par le circuit de commande 17, comme par exemple une commande de la vitesse de fonctionnement désirée du moteur 13 ;
- une entrée OFF adaptée à recevoir un signal de coupure de l'alimentation du moteur SCAM issu du moyen 14 d'inhibition du circuit d'alimentation du moteur, et plus précisemment issu du comparateur 23 ;
- une entrée ON adaptée à recevoir un signal RCAM de remise à zéro du circuit d'alimentation du moteur, c'est à dire d'annulation de l'inhibition induite par le signal SCAM ;
- et une entrée END adaptée à recevoir un signal SBDCAM de blocage définitif du circuit d'alimentation du moteur, destiné à inhiber définitivement ce circuit dans le cas où le nombre maximum d'essais à été atteint sans que le résultat ait été positif, ceci afin d'éviter une décharge complète de la batterie.

Ce circuit 9 d'alimentation du moteur comporte en outre au moins deux sorties EI et EO qui sont reliées aux bornes d'alimentation du moteur 13, tel qu'un moteur à courant continu.

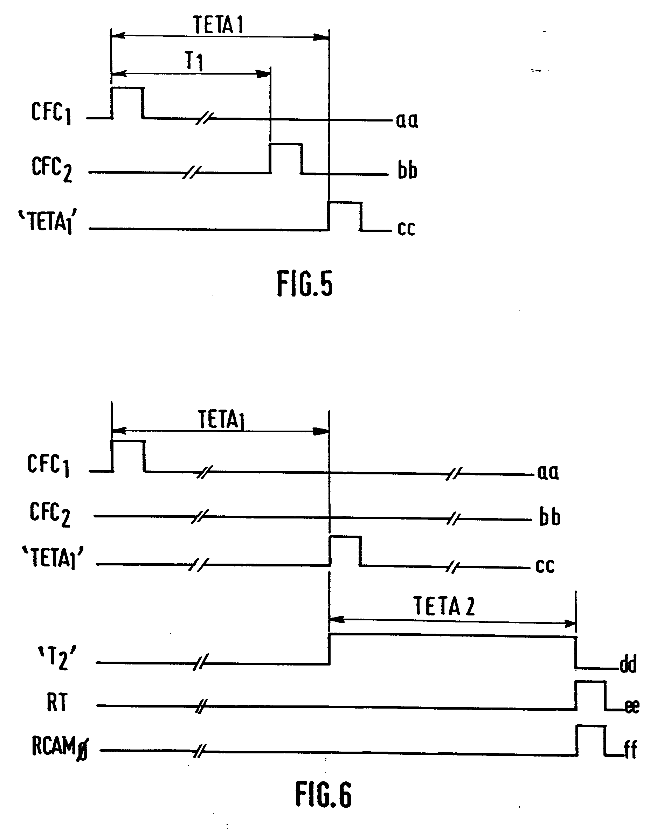

Ce circuit 9 d'alimentation du moteur sera repris avec plus de précisions lors de la description de la figure 4.

Le dernier élément de l'unité de commande 2 restant à décrire en considérant le schéma de la figure 2 est le circuit de commande 17. Celui-ci comporte diverses entrées qui sont notamment :
- une entrée adaptée à recevoir la tension de la batterie du véhicule +BAT ;
- trois entrées Interm, MC et PW adaptées à recevoir des signaux issus des organes de commande 3 actionnables par un utilisateur, et qui sont respectivement, un signal de mise en fonctionnement intermittent, un signal de mise en fonctionnement continu, et un signal de mise en fonctionnement consécutif à une action sur le lave-glace ;
- éventuellement des entrées pouvant recevoir des informations sur les conditions de fonctionnement du dispositif d'alimentation de l'invention, fournies par des capteurs, et par exemple destinées à adapter la vitesse de balayage de l'essui-glace en fonction de la quantité d'eau sur la vitre ou encore en fonction d'autres paramètres.

Le circuit de commande 17 comporte en outre un certains nombre de sorties qui sont notamment :
- deux sorties GND et V_{CC} entre lesquelles une tension d'alimentation régulée est disponible pour être utilisée par l'ensemble des moyens électroniques du dispositif d'alimentation ;
- une sortie +V_{bat}* destinée à fournir au circuit 9 d'alimentation du moteur une source d'énergie en puissance, issue de la tension de la batterie ;
- au moins une sortie de commande COM adaptée à délivrer au moins un signal de commande SCM du moteur au circuit d'alimentation 9 du moteur.

Dans un mode de réalisation préféré de l'invention, la totalité de l'unité de commande 2 peut être réalisée sous la forme d'un circuit intégré unique tel qu'un circuit intégré spécifique ASIC.

A la figure 2, les organes 3 de commande actionnables par un utilisateur sont visibles dans le mode de réalisation de l'invention.

Ces organes de commande permettent à l'utilisateur de définir le mode de fonctionnement du dispositif d'alimentation du moteur d'entraînement. Ils peuvent par exemple comporter un organe 44 à commandes multiples permettant un fonctionnement intermittent ou continu du moteur, également appelé "commodo".

Un bouton-poussoir 46 peut également être prévu pour contrôler le fonctionnement d'une pompe 47 de lave-vitre du véhicule et un fonctionnement impulsionnel du moteur d'entraînement 13.

Sur la figure 2 qui représente un mode de réalisation préféré de ces organes de commande 3, une borne d'alimentation en énergie du circuit de commande 17, désignée par la référence + BAT sur cette figure, est raccordée à la source d'alimentation 45, en parallèle sur un contact de clé 43 et l'organe de commande 44. Cette disposition permet au circuit de commande et au circuit d'alimentation du moteur d'entraînement du bras d'essuie-glace de commander ledit moteur afin qu'il ramène le bras d'essuie-glace dans une position de parquage, ceci même après coupure du contact de clé ou de l'organe de commande.

En effet, l'alimentation de l'unité de commande ne dépend pas de l'état d'ouverture ou de fermeture du contact de clé du véhicule, de sorte qu'une coupure de l'organe de commande ou du contact de clé du véhicule se traduit par le même cycle de retour de l'essuie-glace en position de parquage, que lors du mode de fonctionnement sous contact du dispositif d'alimentation.

A la figure 4, le circuit 9 d'alimentation du moteur est détaillé notamment afin de préciser la façon dont le moteur 13 est commandé. On retrouve les entrées définies ci-dessus, à savoir les entrées +V_{bat}* pour recevoir l'énergie issue de la batterie et fournie par le circuit de commande 17, au moins une entrée INCOM adaptée à recevoir au moins un signal SCM de commande du moteur qui est fourni par le circuit de commande 17, une entrée OFF adaptée à recevoir un signal SCAM de coupure de l'alimentation du moteur issu du moyen 14 d'inhibition du circuit d'alimentation du moteur, une entrée ON adaptée à recevoir un signal RCAM de remise à zéro du circuit d'alimentation du moteur, c'est à dire d'annulation de l'inhibition induite par le signal SCAM, et une dernière entrée END adaptée à recevoir un signal SBDCAM de blocage définitif du circuit d'alimentation du moteur et issu du comparateur 36.

Les signaux SCM, SCAM, RCAM et SBDCAM sont transmis à un bloc de commande 51, dont le rôle est de provoquer le fonctionnement du moteur dans un sens ou dans l'autre, en fonction des informations de commandes portées par lesdits signaux.

Ce bloc de commande génère des signaux référencés E et F, qui portent l'information logique suffisante pour commander le fonctionnement du moteur 13.

Lorsque E et F sont simultanément à l'état logique 0, le moteur reste à l'arrêt. Lorsque le signal E est à l'état logique 1 et que le signal F est à l'état logique 0 le moteur tourne dans un premier sens déterminé. A l'inverse, lorsque le signal E est à l'état logique 0 et que le signal F est à l'état logique 1, le moteur 13 tourne dans un second sens déterminé.

La mise en conduction du moteur 13 dans un sens ou dans l'autre, est assurée par la commutation d'un couple de transistors 54,56 ou 55,57 respectivement. La commutation de ces deux couples de transistors est assurée par deux couples de signaux A,B et C,D respectivement, qui sont générés respectivement par un organe de commande des transistors 52 ou 53 et appliqués sur la base desdits couples de transistors.

La disposition des transistors 54, 55, 56, 57 est bien connue de l'homme du métier, de même que la connection du moteur entre les points EI et EO. En outre, une résistance 58 peut être connectée entre l'émetteur commun aux transistors 56 et 57 d'une part et la masse éléctrique du montage d'autre part, afin de servir éventuellement à la mesure d'une tension Vₛₑₙₛₑ qui est l'image du courant circulant dans le moteur 13. Cette tension Vₛₑₙₛₑ peut être utilisée comme signal de mesure exploitable par le bloc de commande 51 par exemple.

A la figure 5, un organigramme des signaux CFC₁ et CFC₂ générés par les capteurs de fin de course respectivement 5 et 6 est présenté sur les courbes aa et bb dans le cas où le fonctionnement est normal, c'est à dire lorsque le temps T₁ qui sépare l'activation du capteur 5 de l'activation du capteur 6 par l'élément mobile 11 de l'essuie-glace, c'est à dire le temps T₁ entre le front montant de l'impulsion sur le signal CFC₁ et le front montant de l'impulsion sur le signal CFC₂, est inférieur au temps TETA₁ défini à la figure 3.

Si l'on considère un signal fictif 'TETA₁' qui présente une impulsion lorsqu'un temps TETA₁ s'est écoulé depuis le départ de l'impulsion du signal CFC₁ de la courbe aa, on peut considérer l'évènement ci-dessus en disant que la courbe bb présente une impulsion antérieure à celle que présente la courbe cc qui se produit un temps TETA₁.

A la figure 6 par contre, les mêmes signaux sont représentés dans un cas de fonctionnement anormal, voire dans un cas de non fonctionnement du moteur 13. En effet, la courbe aa qui représente le signal CFC₁, présente une impulsion correspondant à l'activation du capteur de fin de course 5. Or, la courbe bb, qui correspond au signal CFC₂ ne présente pas d'impulsion correspondant à l'activation du capteur de fin de course 6, du moins pas avant qu'un temps TETA₁ se soit écoulé depuis le départ de l'impulsion de la courbe aa. Autrement dit, l'impulsion de la courbe cc est antérieure à celle non visible, de la courbe bb.

Dans ce cas, le front montant de l'impulsion de la courbe cc coïncide avec le passage à l'état logique 1 d'un signal fictif 'T₂' visible sur la courbe dd. Ce signal reste à l'état logique 1 pendant le temps TETA₂ défini plus haut, qui est le temps pendant lequel le circuit 9 d'alimentation du moteur est inhibé.

A la fin de ce laps de temps TETA₂, le signal 'T₂' repasse à l'état logique 0 alors que les signaux RT et RCAM₀, visibles sur les courbes ee et ff respectivement, présentent une impulsion dont le front montant coïncide avec le front descendant du signal TETA₂ de la courbe dd.

Ces signaux RT et RCAM₀ sont respectivement destinés à la remise à zéro du compteur de temps 21 et à la remise à zéro conditionnelle du circuit 9 d'alimentation du moteur.

Le dispositif d'alimentation de l'invention dont un mode préféré de réalisation est présenté ci-dessus, permet de pallier les inconvénients des dispositifs de l'état de la technique.

Ainsi, lors du fonctionnement normal de l'essuyage ou lors de la mise en position de parquage du bras de l'essuie-glace, le dispositif d'alimentation est adapté pour déclencher une ou plusieurs autres tentatives d'alimentation du moteur après détection d'un défaut de fonctionnement lors d'une première tentative d'alimentation. Ce nouveau type de dispositif d'alimentation permet de contrôler le non fonctionnement du moteur et d'éviter de le détruire.

Il n'est donc plus nécessaire de disposer de moyens de protection spécifiques dans ou à proximité du moteur dans la mesure où la protection de celui-ci est assurée directement par le dispositif d'alimentation.

De plus, quand l'utilisateur coupe le contact de clé, c'est à dire lorsque le dispositif d'alimentation entre en mode de fonctionnemnt hors contact, de même que lorsque l'utilisateur coupe l'organe de commande alors que le dispositif fonctionne en mode sous contact, le bras d'essuie-glace peut toujours être ramené dans sa position de parquage, dégageant ainsi la vitre du véhicule. Cependant, dans le cas de non fonctionnement du moteur d'entraînement lorsque le dispositif est en mode de fonctionnment hors contact, et si cet état de non fonctionnement persiste au bout d'un certain nombre d'essais restés infructueux, le dispositif ne répète pas ses tentatives à l'infini, ce qui présente notamment l'avantage de ne pas décharger la batterie du véhicule.

Il faut noter que la description d'un mode de réalisation préféré de l'invention a été faite dans le cadre d'un dispositif d'alimentation d'un essuie-glace unique, ceci pour des raisons de clarté de cette description, mais l'invention s'applique aussi tout naturellement à un dispositif d'alimentation d'un moteur électrique entraînant deux ou plusieurs essuie-glaces.

## Revendications

1. Procédé pour l'alimentation d'un moteur électrique (13) d'entraînement d'un bras d'essuie-glace (11) de véhicule automobile, du type consistant à couper au moins provisoirement l'alimentation du moteur (13) en cas de mauvais fonctionnement, voire de non-fonctionnement, l'alimentation étant coupée (62) au bout d'un premier temps déterminé (TETA₁), caractérisé en ce que ledit premier temps déterminé (TETA₁) est au moins supérieur au plus grand des temps aller (T_{F}) et retour (T_{B}) que met le bras (11) d'essuie-glace en conditions de fonctionnement normales pour aller d'une première position extrême de balayage à une deuxième position extrême de balayage.

2. Procédé selon la revendication 1, caractérisé en ce que la coupure (62) de l'alimentation du moteur est inhibée au bout d'un second temps déterminé (TETA₂) afin de permettre un nouvel essai (61) d'alimentation du moteur.

3. Procédé selon la revendication 2, caractérisé en ce que des phases d'alimentation (61) et de coupure (62) sont alternativement répétées jusqu'à obtention (68) dudit comportement déterminé du bras d'essuie-glace.

4. Procédé selon la revendication 2, caractérisé en ce que des phases d'alimentation (61) et de coupure (62) sont alternativement répétées jusqu'à la totalisation d'un nombre d'essais infructueux déterminé (n₁).

5. Procédé selon la revendication 3 ou la revendication 4, caractérisé en ce que, en cas de totalisation du nombre d'essais infructueux déterminé (n₁), l'alimentation du moteur est coupée définitivement (69).

6. Dispositif d'alimentation d'un moteur électrique (13) d'entraînement d'un bras (11) d'essuie-glace de véhicule automobile, du type comportant une unité de commande (2) raccordée à des organes (3) de commande actionnables par un utilisateur et à un moyen de détection (12) doté de capteurs (5,6,7) de position du bras (11) d'essuie-glace, et comportant un circuit (9) de commande de l'alimentation du moteur (13), pilotés par l'unité de commande (2), ladite unité de commande (2) comportant des moyens (2a) de coupure, au moins provisoire, de l'alimentation du moteur au bout d'un premier temps déterminé (TETA₁), caractérisé en ce que ledit premier temps déterminé (TETA₁) est au moins supérieur au plus grand des temps aller (T_{F}) et retour (T_{B}) que met le bras (11) d'essuie-glace en conditions de fonctionnement normales pour aller d'une première position extrême de balayage à une deuxième position extrême de balayage.

7. Dispositif d'alimentation selon la revendication 6, caractérisé en ce que lesdits moyens de coupure (2a) sont connectés à un moyen (14) de manière à couper l'alimentation du moteur (13) pendant un second temps déterminé (TETA₂) si ces moyens de coupure n'ont pas été désactivés par activation d'un capteur de position (5,6) par le bras (11).

8. Dispositif selon la revendication 7, caractérisé en ce que l'unité de commande est adaptée pour déclencher au moins une nouvelle tentative d'alimentation du moteur, après détection d'un défaut de fonctionnement lors d'une première tentative d'alimentation.

9. Dispositif selon l'une quelconque des revendications 7 ou 8, caractérisé en ce que les moyens de coupure (2a) sont reliés aux moyens (9) de commande de l'alimentation du moteur (M).

10. Dispositif selon l'une quelconque des revendications 7 à 9, dans lequel le fonctionnement de l'unité (2) de commande de l'alimentation du moteur (13) est contrôlé en outre par un contact de clé (43) du véhicule et un organe (44) de commande du fonctionnement du moteur, actionnables par un utilisateur et connectés en série entre une source d'alimentation en énergie (45) et l'unité de commande (17), caractérisé en ce qu'une borne d'alimentation en énergie (+ BAT) de l'unité de commande (17) est raccordée à la source d'alimentation (45), en parallèle sur le contact de clé (43) et l'organe de commande (44), pour permettre à l'unité de commander le moteur (13) d'entraînement du bras (11) d'essuie-glace afin qu'il ramène celui-ci dans une position de parquage après coupure du contact de clé (43) ou de l'organe de commande (44).

11. Dispositif selon l'une quelconque des revendications 7 à 10, caractérisé en ce que les moyens de coupure (2a) de l'alimentation du moteur, les moyens d'inhibition (14) du circuit d'alimentation du moteur, le module de détection (16) et le circuit de commande (17) de l'unité de commande (2) sont réalisés dans un circuit intégré unique, tel qu'un circuit intégré spécifique ou ASIC.

## Claims

1. Method for supplying power to an electric motor (13) driving a motor vehicle windscreen wiper arm (11), of the type consisting of cutting, at least temporarily, the power supply to the motor (13) in the event of faulty operation, or even non-functioning, the supply being cut off (62) at the end of a first given time (TETA₁), characterised in that the said first determined time (TETA₁) is at least greater than the greater of the outward (T_{F}) and return (T_{B}) times taken by the windscreen wiper arm (11) under normal operating conditions in order to go from a first extreme sweep position to a second extreme sweep position.

2. Method according to Claim 1, characterised in that the cutting off (62) of the power supply to the motor is inhibited at the end of a second given time (TETA₂) in order to allow a further attempt (61) to supply the motor.

3. Method according to Claim 2, characterised in that supply (61) and cut-off (62) phases are repeated in alternation until the said given behaviour of the windscreen wiper arm is obtained (68).

4. Method according to Claim 2, characterised in that supply (61) and cut-off (62) phases are repeated in alternation until a given number of unsuccessful tests (n₁) have been totalled up.

5. Method according to Claim 3 or Claim 4, characterised in that, in the event of totalling up of the given number of unsuccessful tests (n₁), the power supply to the motor is cut off definitively (69).

6. Device for supplying power to an electric motor (13) driving a motor vehicle windscreen wiper arm (11), of the type having a control unit (2) connected to control devices (3) which can be actuated by a user and a detection means (12) provided with sensors (5, 6, 7) for the position of the windscreen wiper arm (11), and having a circuit (9) for controlling the power supply to the motor (13), these being controlled by the control unit (2), the said control unit (2) having means (2a) for cutting off, at least temporarily, the power supply to the motor at the end of a first given time (TETA₁), characterised in that the said first given time (TETA₁) is at least greater than the greater of the outward (T_{F}) and return (T_{B}) times taken by the windscreen wiper arm (11) under normal operating conditions in order to go from a first extreme sweep position to a second extreme sweep position.

7. Power supply device according to Claim 6, characterised in that the said cut-off means (2a) are connected to a means (14) so as to cut off the power supply to the motor (13) for a second given time (TETA₂) if these cut-off means have not been deactivated by the activation of a position sensor (5, 6) by the arm (11).

8. Device according to Claim 7, characterised in that the control unit is adapted to trigger at least one new attempt to supply the motor, after the detection of an operating failure at the time of a first attempt to supply.

9. Device according to either one of Claims 7 or 8, characterised in that the cut-off means (2a) are connected to the means (9) controlling the power supply to the motor (M).

10. Device according to any one of Claims 7 to 9, in which the operation of the unit (2) controlling the power supply to the motor (13) is also controlled by a key contact (43) of the vehicle and a device (44) for controlling the operation of the motor, actuatable by a user and connected in series between an energy supply source (45) and the control unit (17), characterised in that an energy supply terminal (+ BAT) of the control unit (17) is connected to the power supply source (45), in parallel to the key contact (43) and the control device (44), to enable the unit to control the motor (13) driving the windscreen wiper arm (11) so that it returns the latter to a parking position after the key contact (43) or the control device (44) is cut off.

11. Device according to any one of Claims 7 to 10, characterised in that the means (2a) of cutting off the power supply to the motor, the means (14) inhibiting the motor power supply circuit, the detection module (16) and the circuit (17) controlling the control unit (2) are produced in a single integrated circuit, such as a specific integrated circuit or ASIC.

## Patentansprüche

1. Stromversorgungsverfahren für einen elektrischen Motor (13) zum Antrieb eines Scheibenwischerarms (11) eines Kraftfahrzeugs, das darin besteht, die Stromversorgung des Motors (13) im Falle einer Funktionsstörung oder eines Funktionsausfalls zumindest vorläufig abzuschalten, wobei die Stromversorgung nach Ablauf einer ersten vorgegebenen Zeit (TETA₁) abgeschaltet (62) wird , **dadurch gekennzeichnet,** daß die besagte erste vorgegebene Zeit (TETA₁) zumindest länger als die jeweils längste der Hin- (T_{F}) und Rückbewegungszeiten (F_{B}) ist, die der Scheibenwischerarm (11) unter normalen Betriebsbedingungen benötigt, um sich von einer ersten Wischerendstellung zu einer zweiten Wischerendstellung zu bewegen.

2. Verfahren nach Anspruch 1 , **dadurch gekennzeichnet,** daß die Abschaltung (62) der Stromversorgung des Motors nach Ablauf einer zweiten vorgegebenen Zeit (TETA₂) gesperrt wird, um eine neue Prüfung (61) der Stromversorgung des Motors zu ermöglichen.

3. Verfahren nach Anspruch 2 , **dadurch gekennzeichnet,** daß die Stromversorgungs-(61) und Abschaltphasen (62) abwechselnd bis zur Erzielung (68) des besagten vorgegebenen Verhaltens des Scheibenwischerarms wiederholt werden.

4. Verfahren nach Anspruch 2 , **dadurch gekennzeichnet,** daß die Stromversorgungs-(61) und Abschaltphasen (62) abwechselnd bis zur Aufaddierung einer vorgegebenen Anzahl von erfolglosen Prüfungen (n₁) wiederholt werden.

5. Verfahren nach Anspruch 3 oder Anspruch 4 , **dadurch gekennzeichnet,** daß die Stromversorgung des Motors bei Aufaddierung der vorgegebenen Anzahl von erfolglosen Prüfungen (n₁) endgültig abgeschaltet (69) wird.

6. Vorrichtung zur Stromversorgung eines elektrischen Motors (13) zum Antrieb eines Scheibenwischerarms (11) eines Kraftfahrzeugs, umfassend eine Steuereinheit (2), die an durch einen Benutzer zu betätigende Steuerorgane (3) und an ein Erfassungsmittel (12) mit Lagesensoren (5, 6, 7) für die Position des Scheibenwischerarms (11) angeschlossen ist, und eine Steuerschaltung (9) für die Stromversorgung des Motors (13), die durch die Steuereinheit (2) gesteuert werden, wobei die besagte Steuereinheit (2) Mittel (2a) für eine, zumindest vorläufige, Abschaltung der Stromversorgung des Motors nach Ablauf einer ersten vorgegebenen Zeit (TETA₁) umfaßt, **dadurch gekennzeichnet,** daß die besagte erste vorgegebene Zeit (TETA₁) zumindest länger als die längste der Hin- (T_{F}) und Rückbewegungszeiten (T_{B}) ist, die der Scheibenwischerarm (11) unter normalen Betriebsbedingungen benötigt, um sich von einer ersten Wischerendstellung zu einer zweiten Wischerendstellung zu bewegen.

7. Vorrichtung nach Anspruch 6 , **dadurch gekennzeichnet,** daß die besagten Abschaltmittel (2a) an ein Mittel (14) angeschlossen sind, um die Stromversorgung des Motors (13) während einer zweiten vorgegebenen Zeit (TETA₂) abzuschalten, wenn diese Abschaltmittel nicht durch die Aktvierung eines Lagesensors (5, 6) durch den Scheibenwischerarm (11) desaktiviert worden sind.

8. Vorrichtung nach Anspruch 7 , **dadurch gekennzeichnet,** daß die Steuereinheit in der Lage ist, mindestens einen neuen Versuch zur Stromversorgung des Motors nach der Erfassung einer Funktionsstörung bei einem ersten Stromversorgungsversuch auszulösen.

9. Vorrichtung nach einem der Ansprüche 7 oder 8, **dadurch gekennzeichnet,** daß die Abschaltmittel (2a) mit Mitteln (9) zur Steuerung der Stromversorgung des Motors (M) verbunden sind.

10. Vorrichtung nach einem der Ansprüche 7 bis 9, bei der der Betrieb der Steuereinheit (2) für die Stromversorgung des Motors (13) außerdem durch ein Zündschloß (43) des Fahrzeugs und ein Organ (44) zur Steuerung des Betriebs des Motors kontrolliert wird, die durch einen Benutzer zu betätigen und zwischen einer Energieversorgungsquelle (45) und der Steuereinheit (17) in Reihe geschaltet sind , **dadurch gekennzeichnet,** daß eine Klemme zur Energieversorgung (+ BAT) der Steuereiheit (17) an eine Versorgungsquelle (45) parallel am Zündschloß (43) und am Steuerorgan (44) angeschlossen ist, damit die Steuereinheit den Motor (13) zum Antrieb des Scheibenwischerarms (11) so steuern kann, daß er diesen nach der Abschaltung der Zündung (43) oder des Steuerorgans (44) in eine Parkstellung zurückbringt.

11. Vorrichtung nach einem der Ansprüche 7 bis 10, **dadurch gekennzeichnet,** daß die Mittel (2a) zur Abschaltung der Stromversorgung des Motors, die Mittel (14) zur Sperrung der Stromversorgungsschaltung des Motors, das Erfassungsmodul (16) und die Steuerschaltung (17) der Steuereinheit (2) in einer einzigen integrierten Schaltung, etwa einer spezifischen integrierten Schaltung oder ASIC, ausgeführt sind.
